# EUROPEAN PATENT APPLICATION

(11) **EP 1 504 934 A2**
(43) Date of publication of application: **09.02.2005**
(21) Application number: 04018130.7
(22) Date of filing: 30.07.2004
(51) Int. Cl.: B60H 1/00, B60H 1/32

(54) **Vehicle air-conditioner**

(30) Priority: 04.08.2003 JP 2003286034
(71) Applicant: Calsonic Kansei Corporation, Tokyo 164-8602 (JP)
(72) Inventor: Hatakeyama, Jun Calsonic Kansei Corp., Tokyo 164-8602 (JP)
(74) Representative: Grünecker, Kinkeldey, Stockmair & Schwanhäusser Anwaltssozietät

(57) **Abstract**

An air-conditioner includes a compressor. The air-conditioner includes a first condenser positioned outside of a vehicle-compartment. The air-conditioner includes an expansion valve. The air-conditioner includes an evaporator positioned within an air-passage in the vehicle-compartment for introducing inside or outside air. The air-conditioner includes a second condenser positioned on downstream side of the evaporator in the air-passage. The vehicle air-conditioner has a heating operation mode and a cooling operation mode switchable therebetween. The evaporator and the compressor have an accumulator provided therebetween. The expansion valve opens, while refrigerant has temperatures at 0 °C or less on outlet side of the evaporator.

## Description

### CROSS-REFERENCE TO RELATED APPLICATIONS

This application is based upon and claims the benefit of priority from Japanese Patent Application No. 2003-286034 filed on August 4, 2004; the entire contents of which are incorporated herein by reference.

### BACKGROUND OF THE INVENTION

The present invention relates to a vehicle air-conditioner, where switching between a cooling operation mode and a heating operation mode is performed by selectively using an outside-vehicle condenser and a within-vehicle condenser.

A patent document of Japanese Patent Application Laid-open No. 2002-211234 discloses the above type of vehicle air-conditioner. The vehicle air-conditioner includes a compressor. The air-conditioner includes an outside-vehicle condenser disposed outside of a vehicle compartment. The air-conditioner includes an expansion valve. The air-conditioner includes an evaporator disposed in a within-vehicle air passage introduced with outside and inside air. The air-conditioner includes a within-vehicle condenser disposed downstream of the evaporator in the within-vehicle air passage. In a cooling operation mode, refrigerant is compressed by the compressor and condensed by the outside-vehicle condenser, which radiates heat to the atmosphere. The refrigerant is pressure-reduced at the expansion valve and evaporated in the evaporator to be returned back to the compressor. In a heating operation mode, the refrigerant, compressed in the compressor, is made to bypass the outside-vehicle condenser and condensed by the within-vehicle condenser, where heat is radiates to air flowing in the within-vehicle air passage. The refrigerant is reduced in pressure by the expansion valve and evaporated by the evaporator to be returned back to the compressor.

### SUMMARY OF THE INVENTION

In the vehicle air-conditioner, generally, a proper refrigerant amount during the cooling operation mode is more than a proper refrigerant amount during the heating operation mode. However, an allowable range of the proper refrigerant amount during the heating operation mode is narrow. When the refrigerant amount exceeds the proper range, the refrigerant can not be evaporated fully in the evaporator. This facilitates to produce "blow-by", when liquid refrigerant returns back to the compressor, which may prevent a full stroke of the compressor.

The first aspect of invention provides the following vehicle air-conditioner. The air-conditioner includes a compressor. The air-conditioner includes a first condenser positioned outside of a vehicle-compartment. The air-conditioner includes an expansion valve. The air-conditioner includes an evaporator positioned within an air-passage in the vehicle-compartment for introducing inside or outside air. The air-conditioner includes a second condenser positioned on downstream side of the evaporator in the air-passage. The vehicle air-conditioner has a heating operation mode and a cooling operation mode switchable therebetween.

The cooling operation mode allows refrigerant to be compressed by compressor, to be condensed by the first for radiating heat to outside air, to be reduced in pressure, to be evaporated by the evaporator, and to return back to the compressor.

The heating operation mode allows refrigerant to be compressed by the compressor, to bypass the first condenser, to be condensed by the second condenser for radiating heat to airflow through the air-passage, to be reduced in pressure, to be evaporated by the evaporator, and to return back to the compressor.

The evaporator and the compressor have an accumulator provided therebetween.

The expansion valve opens, while refrigerant has temperatures at 0 °C or less on outlet side of the evaporator.

The first condenser and the expansion valve may have a liquid tank provided therebetween.

The vehicle air-conditioner may include a heater configured to heat airflow through the air-passage. The second condenser is positioned to receive heat from the heater.

The heater may be positioned on windward side of the second condenser.

The heater may be integrated with the second condenser.

The heater may include a radiator configured to radiate heat of cooling water for a vehicle-drive system to airflow through the air-passage.

The compressor may have a variable displacement. Valve opening characteristic of the expansion valve does not cross valve characteristic of a control valve of the compressor in practical operation of the compressor in a graph. The graph has vertical axis denoting refrigerant pressure on outlet side of the evaporator and horizontal axis denoting discharge refrigerant pressure of the compressor. The valve-opening characteristic of the expansion valve has a negative gradient where the refrigerant pressure on outlet side of the evaporator decreases in proportion to increase in the discharge refrigerant pressure of the compressor.

The compressor may have a variable displacement. The vehicle air-conditioner includes a detector configured to detect temperature of airflow to be blown out inside of the vehicle-compartment. The vehicle air-conditioner includes a controller configured to adjust amount of refrigerant to be discharged from the compressor in response to the temperature of airflow, for airflow to be blown out inside of the vehicle-compartment to reach a predetermined temperature.

The second aspect of invention provides the following vehicle air-conditioner. The air-conditioner includes a compressor configured to compress refrigerant. The air-conditioner includes a first condenser positioned outside of a vehicle compartment and being configured to condense compressed refrigerant. The air-conditioner includes an expansion valve configured to reduce condensed refrigerant in pressure. The air-conditioner includes an evaporator positioned within an air-passage inside the vehicle compartment and being configured to evaporate pressure-reduced refrigerant. The air-conditioner includes a second condenser positioned downstream of the evaporator within the air-passage, and being configured to condense compressed refrigerant for radiating heat to airflow through the air-passage. The air-conditioner includes an accumulator connected between the evaporator and the compressor.

The expansion valve may open, while refrigerant has temperature at 0 °C or less at outlet side of the evaporator.

### BRIEF DESCRIPTION OF THE DRAWINGS

Fig. 1 is a schematic diagram of a vehicle air-conditioner according to a first embodiment of the present invention;
Fig. 2 is a diagram showing valve opening characteristics of an expansion valve shown in Fig. 1, where the vertical axis donates refrigerant pressure Pe at the outlet side of evaporator, and the horizontal axis denotes a refrigerant temperature Te at the outlet side of evaporator;
Fig. 3 is a graph showing a relationship between the valve opening characteristics of the expansion valve and control valve characteristics of a compressor shown in Fig. 1, where the vertical axis denotes a refrigerant pressure Pe at the outlet side of the evaporator, and the horizontal axis denotes a discharging refrigerant pressure Pd of the compressor;
Fig. 4 is a flowchart showing a control procedure of a controller;
Fig. 5 is a schematic diagram of a vehicle air-conditioner according to a second embodiment of the present invention; and
Fig. 6 is a schematic diagram of a modified embodiment of the vehicle air-conditioner shown in Fig. 5.

### DETAILED DESCRIPTION OF THE PREFERRED EMBODIMENTS

The following describes embodiments of the present invention with reference to the accompanying drawings.

### First Embodiment

A vehicle air-conditioner 1A (hereinafter, "air-conditioner") includes a refrigerating cycle that performs heat-exchange between refrigerant and air, with the refrigerant circulated therein. The air-conditioner 1A includes a hot water line which allows engine-cooling water (cooling water for vehicle driving system) heated by exhaust heat of an engine. The hot water line performs heat-exchange between the engine cooling water and air.

The refrigerating cycle includes a compressor 2. The refrigerating cycle includes a main condenser 3 serving as a within-vehicle condenser and a sub-condenser 4 serving as a within-vehicle condenser downstream of the compressor 2. The refrigerating cycle includes a liquid tank 5, an expansion valve 6 and an evaporator 7 downstream of both the condensers 3, 4. These members are in fluid communication with and connected to one another through piping members. Refrigerant is imparted with kinetic energy from the compressor 2 to be circulated among them.

The compressor 2 is arranged outside of a vehicle compartment such as an engine room. The compressor 2 compresses low- pressure gaseous refrigerant sucked to be discharged as gaseous refrigerant with high pressure. The compressor 2 is transmitted with power of, for example, a crank shaft of an engine 10 via a compressor clutch 8, being driven. The compressor 2 is a swash plate compressor, where a swash plate can be controlled in inclination externally with an electric signal.

The compressor 2 has a control valve of an electronically operable type (ECV) (not shown) such as an electromagnetic or solenoid valve which can be externally controlled by an electric signal. For example, the ECV may be an electromagnetic valve put in communication with a high-pressure side. The electromagnetic valve allows communication between a crank case interior and a low-pressure side through a passage with a predetermined opening degree. A pressure inside the crank case is relieved to the low-pressure side through a passage. Turning the electromagnetic value ON/OFF to introduce/shut off high- pressure side pressure controls the pressure inside the crack case. This changes the balance of pressure applied to a piston, which allows for change of the swash plate in inclination, thereby controlling a discharge volume of the compressor 2.

The electromagnetic valve is inputted with a duty signal with a duty ratio with a proper value from a control unit which controls an operation of the whole vehicle air-conditioner 1A. When a small displacement is required, the electromagnetic valve is inputted with a duty signal with a large duty ratio. This signal prolongs a valve opening time of the electromagnetic valve to raise the pressure inside the crank case. When a large displacement is required, the electromagnetic valve is inputted with a duty signal with a small duty ratio. This signal shortens the valve opening time of the electromagnetic valve to lower the pressure inside the crack case. A variable displacement compressor is used to adjust the discharge volume to a proper value according to situations, thus achieving power saving and stabilization of the refrigerating cycle.

The main condenser 3 is disposed outside the vehicle compartment. The main condenser 3 has gaseous refrigerant with high temperature and high pressure which is discharged from the compressor 2 to pass through the main condenser 3. The main condenser 3 radiates heat of the refrigerant to the atmosphere- For example, driving of a blower 11 such as an electric fan allows outside air to be blown on the main condenser 3. The main condenser 3 performs heat exchange between gaseous refrigerant with high temperature and high pressure and outside air, radiating heat from the gaseous refrigerant to the atmosphere.

The sub-condenser 4 is disposed in a within-vehicle air passage P1 (hereinafter, "a passage"). The sub-condenser 4 has gaseous refrigerant with high temperature and high pressure discharged from the compressor 2. The sub-condenser 4 radiates heat of the refrigerant to air flowing in the flow passage P1. The air absorbs heat of the refrigerant radiated by the sub-condenser 4, flowing downstream of the passage P1 as hot air.

In the air-conditioner 1A, the main condenser 3 and the sub-condenser 4 are connected in parallel. The main condenser 3 and the sub-condenser 4 are selectively used. That is, the air-conditioner 1A has a flow passage through which refrigerant discharged from the compressor 2 flows. The flow passage is branched to a first cooling line L1 in fluid communication with the main condenser 3 and a second refrigerant line L2 in fluid communication with the sub-condenser 4 using a three-way connector 12. The first refrigerant line L1 and the second refrigerant line L2 join at a precedent stage of the liquid tank 5 using a three-way connector 13. The three-way connector 12 and the compressor 2 have therebetween a sensor 9 serving as a detector for detecting a refrigerant pressure discharged from the compressor 2.

The first refrigerant line L1 has an electromagnetic valve 14 and a check valve 15 upstream of and downstream of the main condenser 3, respectively. Simultaneously, the second refrigerant line L2 has an electromagnetic valve 16 and a check valve 17 upstream of and downstream of the sub-condenser 4, respectively. The air-conditioner 1A includes a control unit, which switches or controls opening/closing of the electromagnetic valve 14 on the first refrigerant line L1 and opening/closing of the electromagnetic valve 16 on the second refrigerant line L2. The switching allows one line to be selected from the first refrigerant line L1 and the second refrigerant line L2.

Specifically, in a cooling operation mode, the control unit sets the electromagnetic valve 14 on the first refrigerant line L1 to "open" and sets the electromagnetic valve 16 of the second refrigerant line L2 to "close".

The settings select the first refrigerant line L1, through which refrigerant discharged form the compressor 2 is supplied to the main condenser 3. In the heating operation mode, the control unit sets the electromagnetic valve 14 on the first refrigerant line L1 to "close" and sets the electromagnetic valve 16 on the second refrigerant line L2 to "open". The settings select the second refrigerant line L2, through which refrigerant discharged from the compressor 2 is supplied to the sub-condenser 4.

The control unit in the air-conditioner 1A functions as a switching unit for performing selective switching between the first refrigerant line L1 and the second refrigerant line L2. The passage for refrigerant discharged from the compressor 2 is switched between the cooling operation mode and the heating operation mode, thus allowing the main-condenser 3 and the sub-condenser 4 to be selectively used.

The liquid tank 5 temporarily stores refrigerant which has been radiated to a low temperature and liquefied by the main condenser 3 or the sub-condenser 4. The liquid tank 5 is provided with a dust-removing filter, which functions as removal of dusts mixed in liquefied refrigerant stored. The liquid tank 5 stores refrigerant between the main condenser 3 and the expansion valve 6 during cooling operation. This prevents the liquid tank 5 from returning to the main condenser 3, thus ensuring condensing performance of the main condenser 3.

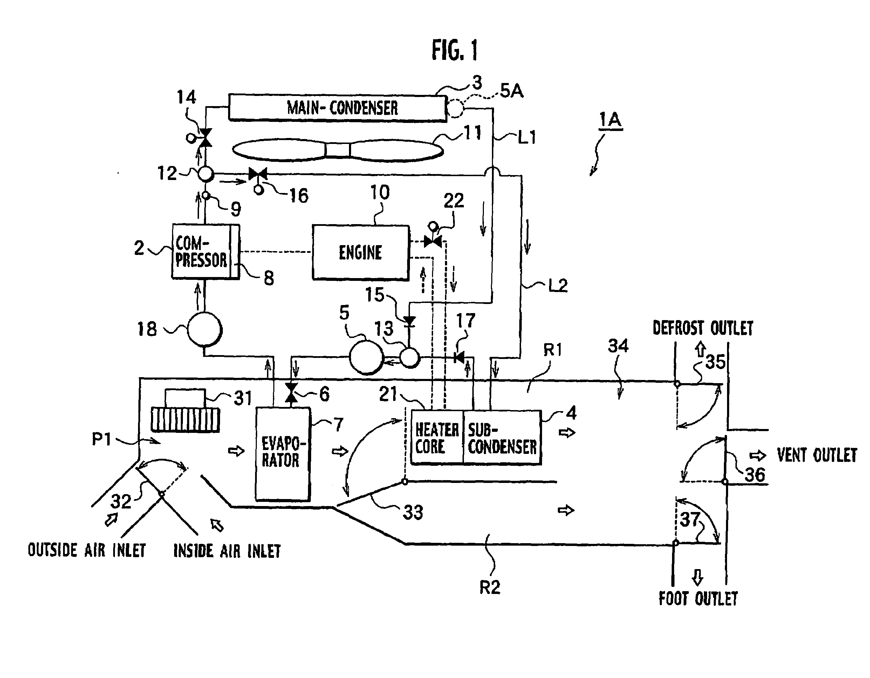

The liquid tank 5 is disposed downstream of the three-way connector 13. It may be difficult to dispose the liquid tank 5 downstream of the three-way connector 13 because of limitation due to a piping layout of an engine room interior. In such a case, the liquid tank 5A may be disposed just after the main condenser 3, as shown with a broken line in Fig.1, or integrally with the main condenser 3. In this case, refrigerant, which is liquefied by the sub-condenser 4 under heat radiation, is directly supplied to the expansion valve 6 without the liquid tank 5.

The expansion valve 6 expands liquid refrigerant flowed from the liquid tank 5 rapidly, to be supplied to the evaporator 7 as misty refrigerant with a low temperature and a low pressure. This expansion valve 6 is of a temperature type, with the set value varying in dependence on a high pressure.

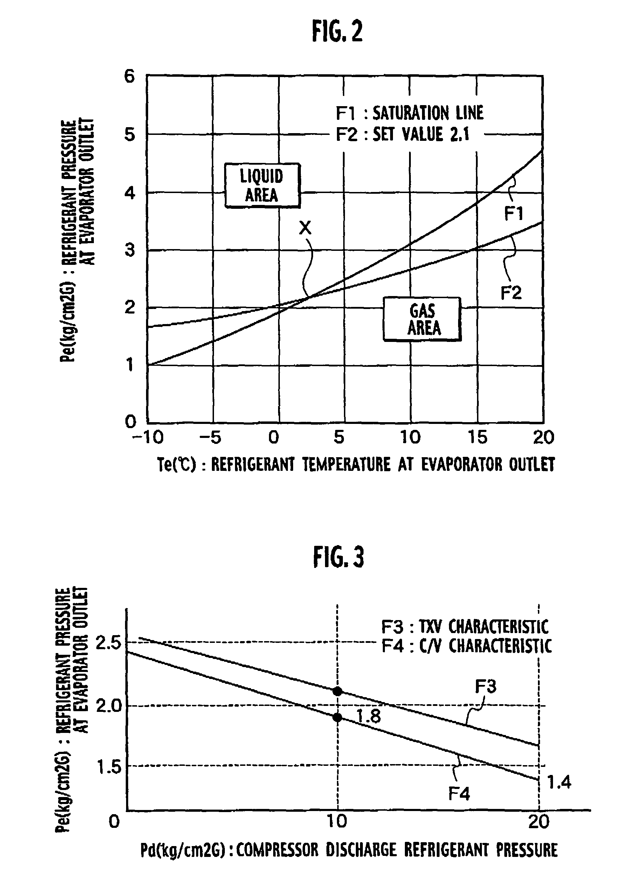

The set value means a refrigerant pressure Pe (when a pressure at the expansion valve inlet side is 10.5kg/cm²G) at the outlet side of the evaporator 7 having a refrigerant temperature Te of 0°C. This embodiment uses, for example, the set value = 2.1. Fig. 2 is a graph showing change of an expansion valve pressure sensing section pressure (corresponding to Pe) obtained when an expansion valve temperature sensing section temperature (corresponding to Te) varies at a pressure of 10.5kg/cm²G. When Te is a temperature lower than a crossing point X (about 3°C) with a refrigerant 134a saturate line, the valve is not closed fully, allowing refrigerant to continuously flow.

In a graph shown in Fig. 3, the vertical axis denotes a refrigerant pressure Pe at the outlet side of the evaporator 7 and the horizontal axis denotes a discharging refrigerant pressure Pd of the compressor 2. In an operation practical range (Pd = 0 to 30kg/cm²G) of the compressor 2 in the graph of Fig. 3, the valve-opening characteristic TXV F3 of the expansion valve 6 is positioned above the control valve characteristic C/V F4 of the compressor 2. The TXV F3 and the C/V F4 do not cross each other. The TXV characteristic F3 has a gradient inclining downward in proportion to increase in Pd.

The TXV does not cross the C/V, and a control interference region where such a drawback as hunting can be prevented. A proper superheat can be obtained due to lowering of the set value in the expansion valve during high load. This improves a cooling capacity and achieves power saving due to lowering a refrigerant flow rate. During low load, the optimal refrigerant flow rate over the whole region improves the temperature over the entire evaporator to a temperature distribution including no deviation, thus achieving cooling with excellent effectiveness. In the heating operation mode, the refrigerant flow rate can be increased to accelerate Pd rising in an initial stage of actuation of the compressor 2 or during a transient period where the Pd is low, and a proper superheat can be obtained in a stable period where the Pd is about 20. This suppresses a destroke phenomenon due to liquid back. Further, the effect or advantage allows for establishment of cooling and heating cycles with one expansion valve, thus reducing the number of cycle constituting members and manufacturing cost.

The evaporator 7 is disposed upstream of the sub-condenser 4 in the passage P1. The evaporator 7 permits misty refrigerant with a low temperature and a low pressure, supplied from the expansion valve 6, to absorb heat of air flowing in the passage P1.

A refrigerant turns into mist with a low temperature and a low pressure by the expansion valve 6, and is supplied to the evaporator 7. The refrigerant absorbs heat from air flowing in the passage P1 to be evaporated while passing through the evaporator 7. The gaseous refrigerant is sucked in the compressor 2 to be compressed again and discharged. Air is heat-absorbed and moisture-removed by the refrigerant in the evaporator 7, flowing downstream of the passage P1 as cool wind.

The refrigerating cycle circulates the refrigerant in the above manner, and performs heat exchange in the main condenser 3 or sub-condenser 4 and the evaporator 7, thereby producing hot air or cool wind in the passage P1.

The air-conditioner 1A of this embodiment includes an accumulator 18 in the passage between the evaporator 7 and the compressor 2. The accumulator 18 has a capacity set such that excess refrigerant is stored during heating operation mode.

That is, a proper refrigerant amount in the cooling operation mode is 500 to 600g, while a proper refrigerant amount in the heating operation mode is 200 to 300g. The maximum excess refrigerant amount in the heating operation mode is 400g. A specific gravity of refrigerant at a time of SHO and at a compressor suction pressure (about 1.0 to 1.3kg/cm²G) in the heating operation mode is 1330kg/m³. The volume of the excess refrigerant is calculated as about 300cc by dividing 400 by 1.33. The volume of the accumulator 18 may have about 300cc.

Excess liquid refrigerant in the heating operation mode is stored in the accumulator 17. This greatly expands a management range of a refrigerant charging amount in the heating operation mode to 200 to 600g and reduces a compressor "blow-by" phenomenon due to liquid back. The storage of refrigerant largely expands the management range of the set value of the expansion valve. This facilitates compatibility of cooling and heating operations even at the set value and expands a management range of an orifice in size. Further, the storage of refrigerant suppresses liquid refrigerant from storing in the compressor when the vehicle gets colder a cold season, thus advantageously improving the compressor in actuation performance. The storage of refrigerant prevents a fixed displacement compressor from failure due to compression of liquid refrigerant therein.

The hot water line has a heater core 21 as a heater and a radiator incorporated there into. The hot water line has engine-cooling water circulated as cooling water for a vehicle driving system. The hot water line performs heat exchange utilizing an engine-cooling water whose temperature has been raised to a high temperature due to exhaust heat of the engine 10. The use of the radiator for radiating heat from the cooling water for a vehicle driving system allows an effective instant heating performance without using such a power source as electric power.

The heater core 21 is disposed downstream of the evaporator 7 in the passage P1 together with the sub-condenser 4. The heater core 21 has cooling water supplied from a water jacket of the engine 10 via a piping member, namely, engine cooling water whose temperature has been raised to a high temperature due to exhaust heat of the engine as heat medium. The heater core 21 radiates retention heat of the engine cooling water. Airflow flowing in the passage P1 absorbs heat from the heater core 21 as well as heat of the refrigerant radiated by the sub-condenser 4 described above. This effectively produces hot air in the passage P1.

The air conditioner 1A includes a piping member for supplying engine cooling water from the water jacket of the engine 10 to the heater core 21. The piping member has a water valve 22. The control unit adjusts the water valve 22, thereby regulating a flow rate of the engine cooling water to be supplied to the heater core 21, namely, a radiation amount of the heater core 21.

In the air-conditioner 1A, sub-condenser 4 is disposed at a position allowing reception of heat from the heater core 21. The position allowing reception of heat from the heater core 21 means a position where heat from the heater core 21 is transmitted even in such a state the passage P1 does not include airflow flowing therein. Specifically, when the sub-condenser 4 is disposed extremely near the heater core 21 or when the sub-condenser 4 and the heater core 21 are integrally structured each other, the sub-condenser 4 can receive heat from the heater core 21.

The disposal of the sub-condenser 4 at the position allowing reception of heat from the heater core 21 increases temperature load on the sub-condenser 4, thus rapidly raising refrigerant discharging pressure Pd. The disposition develops considerably excellent rapid heating performance. Further, this disposition reduces a charging refrigerant amount, which reduces the liquid tank 5 in size. In order to further improve the rapid heating performance, the heater core 21 may be disposed windward or upstream of the sub-condenser 4 in the passage P1.

That is, when the heater core 21 is disposed downwind or downstream of the sub-condenser 4, airflow serving as cooling wind directly strikes or contacts on the sub-condenser 4. This reduces the temperature load of the sub-condenser, thereby suppressing rising of the refrigerant discharging pressure.

On the other hand, when the heater core 21 is disposed windward or upstream of the sub-condenser 4, airflow serving as cooling wind strikes or contacts on the sub-condenser 4 via the heater core 21. This does not reduce the temperature load on the sub-condenser so much, thereby allowing the refrigerant discharging pressure to be further rapidly raised.

In this case, heat of the heater core 21 conducts to the sub-condenser 4 via airflow flowing in the passage P1. This achieves an excellent conduction efficiency of heat which is conducted from the heater core 21 to the sub-condenser 4, thus developing a further excellent rapid heating performance.

For achieving more excellent rapid heating performance, the sub-condenser 4 and the heater core 21 which constitutes a within-vehicle heat exchanger for radiation may be constituted in an integral structure. The integral structure of the sub-condenser 4 and the heater core 21 allows heat of the heater core 21 to be directly conducted or transmitted to the sub-condenser 4. This makes further excellent conductive efficiency of heat which is conducted from the heater core 21 to the sub-condenser 4, thereby developing a remarkably excellent rapid heating performance.

The integral structure of the sub-condenser 4 and the heater core 21 is advantageous from a viewpoint of downsizing of the entire apparatus and the cost-reduction. With regard to the integration of the sub-condenser 4 and the heater core 21 with each other, fins of the sub-oondenser 4 and the heater core 21 may be integrated with each other.

The passage P1 has a blower fan 31 upstream thereof. The blower fan 31 is driven to introduce outside air from an outside-air inlet into the passage P1 or to introduce inside air from an inside-air inlet into the passage P1. The passage P1 has an intake door 32 provided in the vicinity of the outside air inlet and the inside air inlet. The drive and control of the intake door 32 regulates a ratio of outside air and inside air introduced into the passage P1.

Airflow is introduced from the outside-air inlet or the inside-air inlet into the passage P1, where the airflow first passes through the evaporator 7 disposed on the upstream side of the passage P1. The airflow is heat-absorbed by refrigerant inside the evaporator 7, being dehumidified. The airflow flows downstream as cooling wind.

The passage P1 is branched downstream of the evaporator 7 into a hot air passage R1 and a bypass passage R2. The hot air passage R1 has the heater core 21 and the sub-condenser 4. The bypass passage R2 bypasses the heater core 21 and the sub-condenser 4. A portion of the airflow flows into the hot air passage R1 to pass through the heater core 21, where the airflow absorbs heat from the heater core 21. The airflow further passes through the sub-condenser 4, where the airflow absorbs heat radiated from the refrigerant in the sub-condenser 4, and the airflow flows to the downstream side as hot air. On the other hand, the remaining portion of the airflow flows into the bypass passage R1 to further flow downstream as cooling wind.

An air mix door 33 is provided here at the branch point of the hot air passage R1 and the bypass passage R2. The air mix door 33 adjusts a ratio of flow rates of airflow to the hot air passage R1 and airflow to the bypass passage R2. The air mix door 33 is drive-controlled to adjust the flow rate of airflow flowing to the hot air passage R1 and the flow rate of airflow flowing to the bypass passage R2. This finally adjusts the temperature of airflow blown out of a defroster outlet, a vent outlet or a foot outlet.

The hot air passage R1 and the bypass passage R2 in the passage P1 have an air mix chamber 34 for mixing hot air from the hot air passage R1 and cold air from the bypass passage R2 on a further downstream side thereof. The air mix chamber 34 has the defroster outlet for blowing airflow toward a front window glass, the airflow's temperature being adjusted by mixing hot air and cold air. The air mix chamber 34 has the vent outlet for blowing the airflow toward the upper half of a vehicle passenger. The air mix chamber 34 has the foot outlet for blowing the airflow toward the foot of the vehicle passenger. The air mix chamber 34 includes a defroster door 35, a vent door 36 and a foot door 37 in the vicinity of the respective outlets. The doors are drive controlled to adjust a flow rate of airflow blown from each outlet.

In the air-conditioner 1A, airflow passes through the evaporator 7 to be dehumidified. The airflow is further heated by the heater core 21 or the sub-condenser 4, turning into hot air. This achieves dehumidification during a heating operation.

The air-conditioner 1A has the sub-condenser 4 serving as a within-vehicle heat exchanger for radiation disposed in the passage P1 as well as the heater core 21. The structure not only allows the heater core 21 to produce hot air but also allow even the sub-condenser 4 to produce hot air. This relatively rapidly elevates air temperature in the vehicle compartment, even when engine-cooling water has not reached a sufficient high temperature yet. When the engine cooling water reaches a predetermined temperature, a compressor clutch 8 is turned OFF, which transits the air condition to heating conducted by only the heater core 21 for power saving.

The air-conditioner 1A has control means 100 which stabilizes a blowing temperature during a heating operation. The control means 100 includes a program stored in a memory of the control unit.

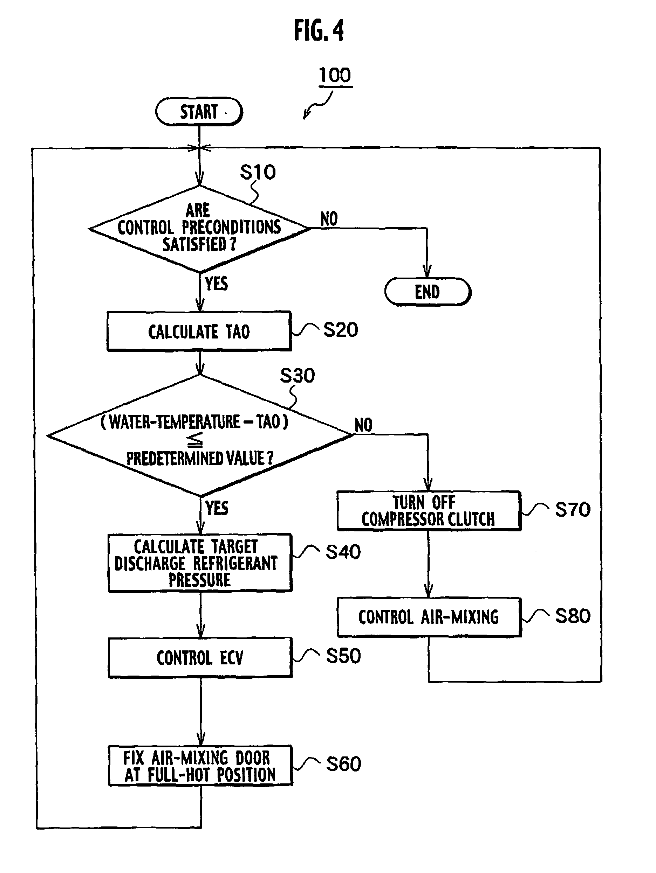

With reference to Fig. 4, when the program starts, first, the control unit makes determination about whether the air-conditioner 1A satisfies preconditions for control (step S10). The preconditions include, for example, ON/OFF condition of an ignition switch, ON/OFF condition of the air-conditioner, and an operation enabling state of ECV Control is made on the basis of data about the preconditions. Specifically, when the control unit makes affirmative determination, the control unit performs the following control. When the control unit makes negative determination , the control unit terminates the control.

When the air-conditioner satisfies the preconditions for control, the control unit calculates a target blowing temperature (TAO). (step S20). The TAO is used for setting a within-vehicle temperature to a set temperature (a within-vehicle temperature desired by a vehicle passenger) inputted from an operation panel (not shown). The TAO is calculated on the basis of values detected by an outside air temperature sensor, a room temperature sensor, a solar radiation amount and the like. Determination is then made about whether the TAO satisfies a control executing condition. That is, a sensor (not shown) which detects a water temperature of engine cooling water detects the water temperature. The control unit calculates a difference between the water temperature and the TAO. When the difference is a predetermined value or less, the control unit makes determination that the control executing condition is satisfied (step S30). The control unit calculates a target discharging refrigerant pressure corresponding to the TAO (step S40).

The value is set for the temperature of airflow at the outlet side of the sub-condenser 4 to coincide with the TAO. The TAO is set in a range of 30 to 60°C, and the target discharging refrigerant pressure is set in a range of 10 to 20kg/cm²G. For example, when the TAO is 30°C, the target discharging refrigerant pressure is set to 10kg/cm²G. When the TAO is 55°C, the target discharging refrigerant pressure is set to 18kg/cm²G.

The ECV of the compressor 2 is then controlled to set the discharging refrigerant pressure of the compressor 2 detected by the sensor 9 to the target discharging refrigerant pressure (step S50). Further, the air mix door 33 is fixed at a position (a full HOT position) where airflow flowing in the passage P1 is introduced to only the hot air passage R1, as shown with a solid line (step S60).

The control returns back to step S10 where the above processing is repeated. On the other hand, the temperature of the engine rises and a difference between the water temperature of the engine cooling water and the TAO becomes larger than the predetermined value in step S30. This allows the compressor clutch 8 to be turned OFF, so that air conditioning is transited to heating conducted by only the heater core 21 (step S70). Further, the control proceeds to air mix control (step S80). The air mix door 33 is adjusted in angle, which allows airflow to flow from the passage P1 to the hot air passage R1 and bypass passage R2 and to mix in the air mix chamber 34.

According to the air-conditioner 1A, even if a change of an evaporator load or an engine revolution number changes a discharging refrigerant pressure of the compressor 2, a discharging refrigerant displacement of the compressor 2 is controlled to rapidly return the discharging refrigerant pressure back to a target discharging refrigerant pressure, which stabilizes a blowing temperature.

Even if a within-vehicle temperature reaches a set temperature, when a water temperature of engine cooling water is low, not only the heater core 21 but also the compressor 4 produces hot air. The hot air maintains a blowing temperature at a set temperature and prevents a blowing temperature from lowering rapidly. Though a driving time of the compressor 2 is prolonged, a discharging refrigerant displacement of the compressor 2 decreases according to rising of the water temperature of the engine cooling water, thereby realizing power saving.

### Second Embodiment

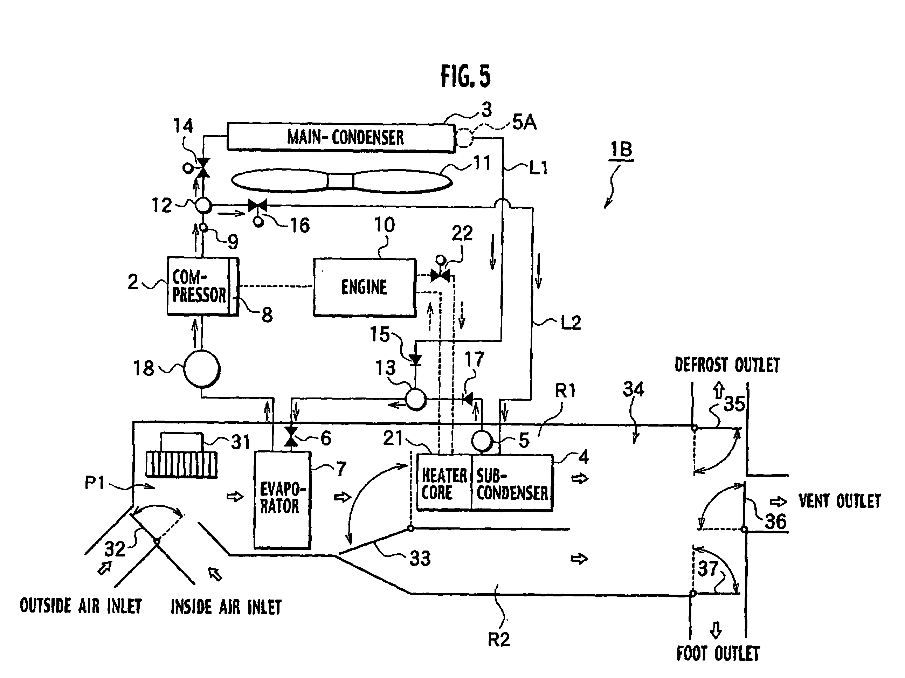

With reference to Fig. 5, an air-conditioner 1B has a liquid tank 5 disposed between the sub-condenser 4 and the three-way valve 13. The air-conditioner 1B includes a liquid tank 5A just after a main condenser 3 or use a main condenser integrated with a liquid tank. The structure allows use of a tank with a volume suitable for each condenser and prevents unnecessary liquid refrigerant from entering in each condenser. This advantageously ensures a desired cooling/heating performance.

This structure allows use of sub-cool condenser. The sub-cool condenser is used to improve a cooling performance for cooling liquid refrigerant. In view of fluctuation of refrigerant at a charging time thereof or leakage of refrigerant after charged, the main condenser, liquid tank and sub-cool tank are disposed in this order from an upstream side so as to allow for slight increase/decrease in a refrigerant amount. That is, the refrigerant is discharged from the main condenser to be separated to only liquid refrigerant and supplied to the sub-cool condenser.

In Fig. 1, the liquid tank 5 is disposed downstream of a joining point of the first refrigerant line L1 and the second refrigerant line L2. The sub-cool condenser 4 is disposed downstream of the liquid tank 5 so as to allow reception of wind. According to this disposition, no problem occurs during cooling operation, but refrigerant further flows from the sub-condenser 4 to the sub-cool condenser. This allows refrigerant to be cooled by outside air with low temperature, which lowers high pressure, without achieving a sufficient heating performance.

According to the second embodiment, liquid tanks are respectively disposed in the refrigerant lines L1 and L2 upstream of the joining point of the first refrigerant line L1 and the second refrigerant line L2. The sub-cool condenser is disposed in the first refrigerant line L1 serving as an exclusive cooling passage. This disposition improves a cooling performance without lowering a heating performance.

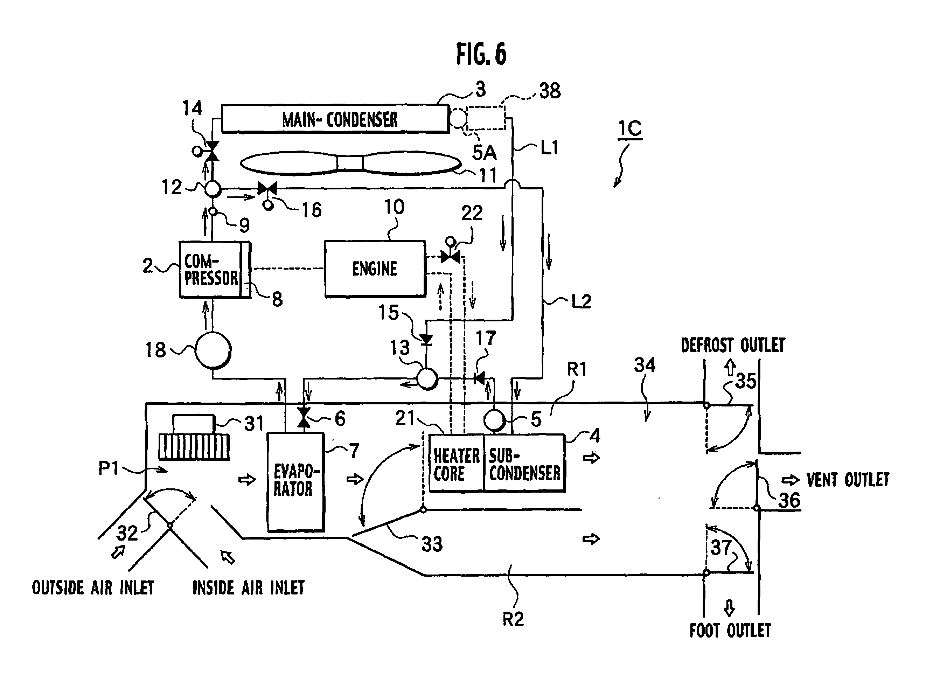

As shown in Fig. 6, for example, an air-conditioner 1C has a sub-cool condenser 38 downstream of the liquid tank 5A, or uses a main condenser integrated with the liquid tank and sub-cooling tank. A blower 11 can also feed wind to the sub-cool condenser.

In this embodiment, detection of a discharging refrigerant pressure of the compressor permits control of a discharging refrigerant displacement thereof. On the other hand, instead of this configuration, detection of a discharging refrigerant temperature of the compressor or airflow temperature on the outlet side of the within-vehicle heat exchanger for radiation may permit control of the discharging refrigerant displacement of the compressor.

In this embodiment, OFF of the compressor clutch transfers air-conditioning to heating using only the radiator. Instead of this, a control signal from the control unit may minimize the discharging refrigerant displacement of the compressor. This prevents substantial operation of the heat pump, which may transfer the air-conditioning to heating using only the radiator.

The radiator radiates heat of engine cooling water to airflow blown to the vehicle compartment. Instead of this configuration, the radiator may radiate heat of vehicle driving system cooling water except for the engine cooling water, such as cooling water for a motor of an electric vehicle, stack cooling water for a fuel cell vehicle or the like.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

According to the invention, during the heating operation mode, excess refrigerant is stored in the accumulator, which greatly expands a management range of a refrigerant charging amount in the heating operation mode, thus reducing a compressor "blow-by" phenomenon due to liquid back. The storage of refrigerant largely expands the management range of the set value of the temperature-type expansion valve. This facilitates compatibility of cooling and heating operations even at the set value and expands a management range of an orifice in size. Further, the storage of refrigerant suppresses liquid refrigerant from storing in the compressor when the vehicle gets colder a cold season, thus advantageously improving the compressor in actuation performance.

## Claims

1. A vehicle air-conditioner comprising:
a compressor;
a first condenser positioned outside of a vehicle-compartment;
an expansion valve;
an evaporator positioned within an air-passage in the vehicle-compartment for introducing inside or outside air; and
a second condenser positioned on downstream side of the evaporator in the air-passage,
wherein the vehicle air-conditioner has a heating operation mode and a cooling operation mode switchable therebetween,
wherein the cooling operation mode allows refrigerant to be compressed by compressor, to be condensed by the first for radiating heat to outside air, to be reduced in pressure, to be evaporated by the evaporator, and to return back to the compressor,
wherein the heating operation mode allows refrigerant to be compressed by the compressor, to bypass the first condenser, to be condensed by the second condenser for radiating heat to airflow through the air-passage, to be reduced in pressure, to be evaporated by the evaporator, and to return back to the compressor,
wherein the evaporator and the compressor have an accumulator provided therebetween,
wherein the expansion valve opens, while refrigerant has temperatures at 0 °C or less on outlet side of the evaporator.

2. The vehicle air-conditioner of claim 1,
wherein the first condenser and the expansion valve have a liquid tank provided therebetween.

3. The vehicle air-conditioner of claim 1, further comprising:
a heater configured to heat airflow through the air-passage,
wherein the second condenser is positioned to receive heat from the heater.

4. The vehicle air-conditioner of claim 3,
wherein the heater is positioned on windward side of the second condenser.

5. The vehicle air-conditioner of claim 3,
wherein the heater is integrated with the second condenser.

6. The vehicle air-conditioner of claim 3,
wherein the heater comprises a radiator configured to radiate heat of cooling water for a vehicle-drive system to airflow through the air-passage.

7. The vehicle air-conditioner of claim 1,
wherein the compressor has a variable displacement,
wherein valve opening characteristic of the expansion valve does not cross valve characteristic of a control valve of the compressor in practical operation of the compressor in a graph,
wherein the graph has vertical axis denoting refrigerant pressure on outlet side of the evaporator and horizontal axis denoting discharge refrigerant pressure of the compressor,
wherein the valve-opening characteristic of the expansion valve has a negative gradient where the refrigerant pressure on outlet side of the evaporator decreases in proportion to increase in the discharge refrigerant pressure of the compressor.

8. The vehicle air-conditioner of claim 1,
wherein the compressor has a variable displacement,
wherein the vehicle air-conditioner comprises:
a detector configured to detect temperature of airflow to be blown out inside of the vehicle-compartment; and
a controller configured to adjust amount of refrigerant to be discharged from the compressor in response to the temperature of airflow, for airflow to be blown out inside of the vehicle-compartment to reach a predetermined temperature.

9. A vehicle air-conditioner comprising:
a compressor configured to compress refrigerant;
a first condenser positioned outside of a vehicle compartment and being configured to condense compressed refrigerant;
an expansion valve configured to reduce condensed refrigerant in pressure;
an evaporator positioned within an air-passage inside the vehicle compartment and being configured to evaporate pressure-reduced refrigerant;
a second condenser positioned downstream of the evaporator within the air-passage, and being configured to condense compressed refrigerant for radiating heat to airflow through the air-passage; and
an accumulator connected between the evaporator and the compressor.

10. The vehicle air-conditioner of claim 9,
wherein the expansion valve opens, while refrigerant has temperature at 0 °C or less at outlet side of the evaporator.
